# EUROPEAN PATENT APPLICATION

(11) **EP 4 776 159 A1**
(43) Date of publication of application: **15.07.2026**
(21) Application number: 25221379.8
(22) Date of filing: 08.12.2025
(51) Int. Cl.: G06F 16/90

(54) **SYSTEMS, APPARATUSES, METHODS, AND COMPUTER PROGRAM PRODUCTS FOR GENERATING RESPONSIVE ACTION PROGRAMS**

(30) Priority: 10.01.2025 US 202563743977 P
(71) Applicant: Hand Held Products, Inc., Charlotte, NC 28202 (US)
(72) Inventor: TODESCHINI, Erik, Charlotte, 28202 (US)
(74) Representative: Haseltine Lake Kempner LLP

(57) **Abstract**

A method provided herein includes accessing, using a monitoring engine, a computing file provided to a second computing device via a computing file exchange platform. In some embodiments, the method includes identifying, using the computing file and a computing file content model, a content defect associated with the computing file. In some embodiments, the method includes generating, using the content defect and the computing file content model, a responsive action program. In some embodiments, the method includes generating a responsive action program link interface element. In some embodiments, the responsive action program link interface element comprises a responsive action program link representation corresponding to the responsive action program. In some embodiments, the method includes causing the responsive action program link interface element to be rendered to an interface associated with the computing file exchange platform.

## Description

### CROSS-REFERENCE TO RELATED APPLICATIONS

This application claims the benefit of U.S. Provisional Patent Application No. 63/743,977, filed January 10, 2025, the entire contents of which are incorporated by reference herein.

### TECHNOLOGICAL FIELD

Embodiments of the present disclosure relate generally to systems, apparatuses, methods, and computer program products for generating responsive action programs.

### BACKGROUND

Applicant has identified many technical challenges and difficulties associated with systems, apparatuses, methods, and computer program products for responding to content defects associated with computing files. Through applied effort, ingenuity, and innovation, Applicant has solved problems related to systems, apparatuses, methods, and computer program products for responding to content defects associated with computing files by developing solutions embodied in the present disclosure, which are described in detail below.

### BRIEF SUMMARY

Various embodiments described herein relate to systems, apparatuses, methods, and computer program products for generating responsive action programs.

In accordance with one aspect of the disclosure, a method is provided. In some embodiments, the method includes accessing, using a monitoring engine, a computing file provided to a second computing device via a computing file exchange platform. In some embodiments, the method includes identifying, using the computing file and a computing file content model, a content defect associated with the computing file. In some embodiments, the method includes generating, using the content defect and the computing file content model, a responsive action program. In some embodiments, the method includes generating a responsive action program link interface element. In some embodiments, the responsive action program link interface element comprises a responsive action program link representation corresponding to the responsive action program. In some embodiments, the method includes causing the responsive action program link interface element to be rendered to an interface associated with the computing file exchange platform.

In some embodiments, the method includes establishing a monitoring interface with the computing file exchange platform.

In some embodiments, the method includes training the computing file content model using one or more domain resources.

In some embodiments, the method includes generating a responsive action program interface element.

In some embodiments, the responsive action program interface element comprises a responsive action program representation corresponding to the responsive action program.

In some embodiments, the responsive action program comprises one or more subsidiary responsive action programs.

In some embodiments, the method includes causing the responsive action program interface element to be rendered to a second interface.

In some embodiments, the method includes detecting a termination of the responsive action program.

In some embodiments, the method includes generating a responsive action program result based on the termination of the responsive action program.

In some embodiments, the method includes storing the responsive action program result in a responsive action program database in accordance with a computing file identifier associated with the computing file.

In some embodiments, the method includes generating, using the responsive action program result and an implementation model, a responsive action program indicator.

In some embodiments, the method includes storing the responsive action program indicator in a responsive action program database in accordance with a computing file identifier associated with the computing file.

In some embodiments, the monitoring engine, the computing file content model, and the implementation model are part of a composite model framework.

In some embodiments, the method includes accessing, using the monitoring engine, a second computing file provided to the second computing device via the computing file exchange platform.

In some embodiments, the method includes determining a processing consumption value associated with the second computing file.

In some embodiments, the method includes in response to the processing consumption value meeting or exceeding a processing consumption threshold, transmitting the second computing file to a remote computing device.

In some embodiments, the method includes receiving, from the remote computing device, a second responsive action program corresponding to the second computing file.

In some embodiments, the computing file comprises text or audio.

In some embodiments, the computing file comprises one or more images.

In some embodiments, the interface associated with the computing file exchange platform comprises a computing file representation corresponding to the computing file.

In some embodiments, identifying the content defect comprises identifying one or more content features associated with the computing file.

In accordance with another aspect of the disclosure, an apparatus is provided. In some embodiments, the apparatus includes memory and one or more processors communicatively coupled to the memory. In some embodiments, the one or more processors are configured to perform operations comprising accessing, using a monitoring engine, a computing file provided to a second computing device via a computing file exchange platform. In some embodiments, the one or more processors are configured to perform operations comprising identifying, using the computing file and a computing file content model, a content defect associated with the computing file. In some embodiments, the one or more processors are configured to perform operations comprising generating, using the content defect and the computing file content model, a responsive action program. In some embodiments, the one or more processors are configured to perform operations comprising generating a responsive action program link interface element. In some embodiments, the responsive action program link interface element comprises a responsive action program link representation corresponding to the responsive action program. In some embodiments, the one or more processors are configured to perform operations comprising causing the responsive action program link interface element to be rendered to an interface associated with the computing file exchange platform.

In some embodiments, the operations further comprise establishing a monitoring interface with the computing file exchange platform.

In some embodiments, the operations further comprise training the computing file content model using one or more domain resources.

In some embodiments, the operations further comprise generating a responsive action program interface element.

In some embodiments, the responsive action program interface element comprises a responsive action program representation corresponding to the responsive action program.

In some embodiments, the responsive action program comprises one or more subsidiary responsive action programs.

In some embodiments, the operations further comprise causing the responsive action program interface element to be rendered to a second interface.

In some embodiments, the operations further comprise detecting a termination of the responsive action program.

In some embodiments, the operations further comprise generating a responsive action program result based on the termination of the responsive action program.

In some embodiments, the operations further comprise storing the responsive action program result in a responsive action program database in accordance with a computing file identifier associated with the computing file.

In some embodiments, the operations further comprise generating, using the responsive action program result and an implementation model, a responsive action program indicator.

In some embodiments, the operations further comprise storing the responsive action program indicator in a responsive action program database in accordance with a computing file identifier associated with the computing file.

In some embodiments, the monitoring engine, the computing file content model, and the implementation model are part of a composite model framework.

In accordance with another aspect of the disclosure, a computer program product is provided. In some embodiments, the computer program product includes at least one non-transitory computer-readable storage medium having computer program code stored thereon. In some embodiments, the computer program code, in execution with at least one processor, configures the computer program product for accessing, using a monitoring engine, a computing file provided to a second computing device via a computing file exchange platform. In some embodiments, the computer program code, in execution with at least one processor, configures the computer program product for identifying, using the computing file and a computing file content model, a content defect associated with the computing file. In some embodiments, the computer program code, in execution with at least one processor, configures the computer program product for generating, using the content defect and the computing file content model, a responsive action program. In some embodiments, the computer program code, in execution with at least one processor, configures the computer program product for generating a responsive action program link interface element. In some embodiments, the responsive action program link interface element comprises a responsive action program link representation corresponding to the responsive action program. In some embodiments, the computer program code, in execution with at least one processor, configures the computer program product for causing the responsive action program link interface element to be rendered to an interface associated with the computing file exchange platform.

The above summary is provided merely for purposes of summarizing some example embodiments to provide a basic understanding of some aspects of the present disclosure. Accordingly, it will be appreciated that the above-described embodiments are merely examples and should not be construed to narrow the scope or spirit of the disclosure in any way. It will be appreciated that the scope of the present disclosure encompasses many potential embodiments in addition to those here summarized, some of which will be further described below.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates an example diagram of an environment in which embodiments of the present disclosure may operate;
FIG. 2 illustrates an example block diagram of an example apparatus that may be specially configured in accordance with an example embodiment of the present disclosure;
FIG. 3 illustrates an example composite model framework in an accordance with an example embodiment of the present disclosure;
FIG. 4 illustrates an example interface in accordance with one or more embodiments of the present disclosure;
FIG. 5 illustrates an example interface in accordance with one or more embodiments of the present disclosure;
FIG. 6 illustrates a flowchart of an example method in accordance with one or more embodiments of the present disclosure;
FIG. 7 illustrates a flowchart of an example method in accordance with one or more embodiments of the present disclosure; and
FIG. 8 illustrates a flowchart of an example method in accordance with one or more embodiments of the present disclosure.

### DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

### Overview

Example embodiments disclosed herein address technical problems associated with responding to content defects associated with computing files. As would be understood by one skilled in the field to which this disclosure pertains, there are numerous example scenarios in which responding to content defects associated with computing files is desirable. In this regard, in many applications, it may be desirable to use systems, apparatuses, methods, and computer program products for generating responsive action programs to respond to content defects associated with computing files. For example, it may be desirable to use systems, apparatuses, methods, and computer program products for generating responsive action programs in order to respond to content defects in computing files exchanged in real-time via a computing file exchange platform.

Example solutions for responding to content defects associated with computing files include using computing devices and databases to respond to content defects associated with the computing files. However, such example solutions are simplistic, inefficient, reactive, and technically deficient. For example, such example solutions are simplistic because such example solutions are unable to automatically detect content defects associated with computing files that are exchanged in real-time via a computing file exchange platform. As another example, such example solutions are inefficient because such example solutions are unable to determine a processing consumption value associated with a computing file and dynamically allocate the computing file to an appropriately equipped computing device for processing the computing file based on the processing consumption value. As a result, such example solutions cause the computing devices and databases used to respond to content defects associated with computing files to suffer from high latency, consume excessive processing power, and consume excessive memory. As another example, such example solutions are reactive because such example solutions are unable to automatically generate a responsive action program in response to identified content defects. As another example, such example solutions are technically deficient because such example solutions to not implement a specifically configured model framework for generating a responsive action program to respond to a content defect associated with a computing file. Instead, such example solutions rely on independent components of a computing device that respond to a content defect in a disjointed and piecemeal manner. Accordingly, there is a need for systems, apparatuses, methods, and computer program products that are able to generate a responsive action program in a sophisticated, an efficient, a proactive, and a technically sufficient manner.

Thus, to address these and/or other issues related to such example solutions, example systems, apparatuses, methods, and computer program products for generating a responsive action program are disclosed herein. For example, an embodiment in this disclosure, described in greater detail below, includes a method that includes accessing, using a monitoring engine, a computing file provided to a second computing device via a computing file exchange platform. In some embodiments, the method includes identifying, using the computing file and a computing file content model, a content defect associated with the computing file. In some embodiments, the method includes generating, using the content defect and the computing file content model, a responsive action program. In some embodiments, the method includes generating a responsive action program link interface element. In some embodiments, the responsive action program link interface element comprises a responsive action program link representation corresponding to the responsive action program. In some embodiments, the method includes causing the responsive action program link interface element to be rendered to an interface associated with the computing file exchange platform. Accordingly, the systems, apparatuses, methods, and computer program products provided herein enable responding to a content defect associated with a computing file in a sophisticated, an efficient, a proactive, and a technically sufficient manner.

### Example Systems and Apparatuses

Embodiments of the present disclosure herein include systems, apparatuses, methods, and computer program products configured for generating a responsive action program. It should be readily appreciated that the embodiments of the apparatus, systems, methods, and computer program product described herein may be configured in various additional and alternative manners in addition to those expressly described herein.

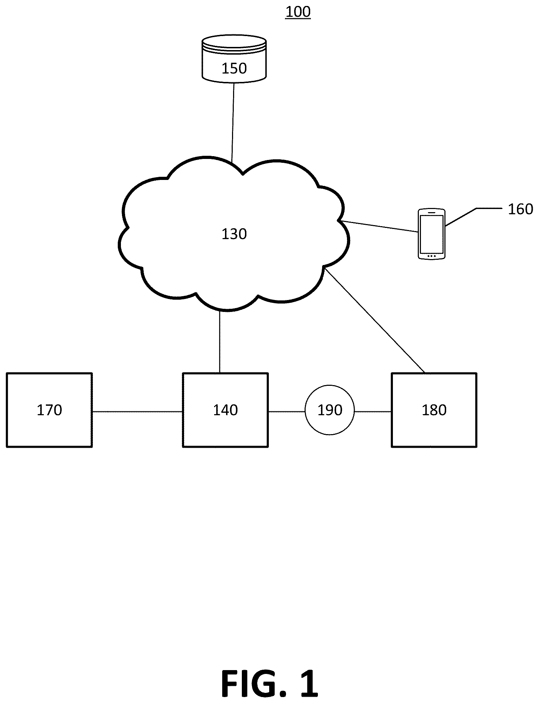

FIG. 1 illustrates an exemplary block diagram of an environment 100 in which embodiments of the present disclosure may operate. In some embodiments, the environment 100 includes a first computing device 140. In some embodiments, the first computing device 140 is electronically and/or communicatively coupled to a remote computing device 170, a computing file exchange platform 190, a second computing device 180, a responsive action program database 150, and/or a user device 160. The first computing device 140 may be located remotely from the remote computing device 170, the computing file exchange platform 190, the second computing device 180, the responsive action program database 150, and/or the user device 160. In some embodiments, the first computing device 140 may be located in a remote cloud server and electronically and/or communicatively coupled to the remote computing device 170, the computing file exchange platform 190, the second computing device 180, the responsive action program database 150, and/or the user device 160. Additionally, or alternatively, the first computing device 140 is an edge device and electronically and/or communicatively coupled to the remote computing device 170, the computing file exchange platform 190, the second computing device 180, the responsive action program database 150, and/or the user device 160. Additionally, or alternatively, the first computing device 140 may be located at the same location as remote computing device 170, the computing file exchange platform 190, the second computing device 180, the responsive action program database 150, and/or the user device 160 and electronically and/or communicatively coupled to the remote computing device 170, the computing file exchange platform 190, the second computing device 180, the responsive action program database 150, and/or the user device 160 via one or more direct connections (e.g., via a wire). In some embodiments, the first computing device 140 is configured via hardware, software, firmware, and/or a combination thereof, to perform data intake of one or more types of data.

Additionally, or alternatively, in some embodiments, the first computing device 140 is configured via hardware, software, firmware, and/or a combination thereof, to generate and/or transmit command(s) that control, adjust, or otherwise impact operations of the one or more of electronically and/or communicatively coupled to the remote computing device 170, the computing file exchange platform 190, the second computing device 180, the responsive action program database 150, and/or the user device 160. For example, the first computing device 140 may be configured to generate a responsive action program. Additionally, or alternatively, in some embodiments, the first computing device 140 is configured via hardware, software, firmware, and/or a combination thereof, to perform data reporting, provide data, and/or other data output process(es) associated with monitoring or otherwise analyzing operations of one or more of the and electronically and/or communicatively coupled to the remote computing device 170, the computing file exchange platform 190, the second computing device 180, the responsive action program database 150, and/or the user device 160. For example, in various embodiments, the first computing device 140 may be configured to execute and/or perform one or more operations and/or functions described herein.

In some embodiments, the environment 100 includes the second computing device 180. In some embodiments, the second computing device 180 is electronically and/or communicatively coupled to the remote computing device 170, the computing file exchange platform 190, the first computing device 140, the responsive action program database 150, and/or the user device 160. The second computing device 180 may be located remotely from the remote computing device 170, the computing file exchange platform 190, the first computing device 140, the responsive action program database 150, and/or the user device 160. In some embodiments, the second computing device 180 may be located in a remote cloud server and electronically and/or communicatively coupled to the remote computing device 170, the computing file exchange platform 190, the first computing device 140, the responsive action program database 150, and/or the user device 160. Additionally, or alternatively, the second computing device 180 is an edge device and electronically and/or communicatively coupled to the remote computing device 170, the computing file exchange platform 190, the first computing device 140, the responsive action program database 150, and/or the user device 160. Additionally, or alternatively, the second computing device 180 may be located at the same location as the remote computing device 170, the computing file exchange platform 190, the first computing device 140, the responsive action program database 150, and/or the user device 160 and electronically and/or communicatively coupled to the remote computing device 170, the computing file exchange platform 190, the first computing device 140, the responsive action program database 150, and/or the user device 160 via one or more direct connections (e.g., via a wire). In some embodiments, the second computing device 180 is configured via hardware, software, firmware, and/or a combination thereof, to perform data intake of one or more types of data.

Additionally, or alternatively, in some embodiments, the second computing device 180 is configured via hardware, software, firmware, and/or a combination thereof, to generate and/or transmit command(s) that control, adjust, or otherwise impact operations of the one or more of electronically and/or communicatively coupled to the remote computing device 170, the computing file exchange platform 190, the first computing device 140, the responsive action program database 150, and/or the user device 160. For example, the second computing device 180 may be configured to generate a responsive action program. Additionally, or alternatively, in some embodiments, the second computing device 180 is configured via hardware, software, firmware, and/or a combination thereof, to perform data reporting, provide data, and/or other data output process(es) associated with monitoring or otherwise analyzing operations of one or more of the and electronically and/or communicatively coupled to the remote computing device 170, the computing file exchange platform 190, the first computing device 140, the responsive action program database 150, and/or the user device 160. For example, in various embodiments, the second computing device 180 may be configured to execute and/or perform one or more operations and/or functions described herein.

In some embodiments, the environment 100 includes the remote computing device 170. In some embodiments, the remote computing device 170 is electronically and/or communicatively coupled to the second computing device 180, the computing file exchange platform 190, the first computing device 140, the responsive action program database 150, and/or the user device 160. The remote computing device 170 may be located remotely from the second computing device 180, the computing file exchange platform 190, the first computing device 140, the responsive action program database 150, and/or the user device 160. In some embodiments, the remote computing device 170 may be located in a remote cloud server and electronically and/or communicatively coupled to the second computing device 180, the computing file exchange platform 190, the first computing device 140, the responsive action program database 150, and/or the user device 160. Additionally, or alternatively, the remote computing device 170 is an edge device and electronically and/or communicatively coupled to the second computing device 180, the computing file exchange platform 190, the first computing device 140, the responsive action program database 150, and/or the user device 160. Additionally, or alternatively, the remote computing device 170 may be located at the same location as the second computing device 180, the computing file exchange platform 190, the first computing device 140, the responsive action program database 150, and/or the user device 160 and electronically and/or communicatively coupled to the second computing device 180, the computing file exchange platform 190, the first computing device 140, the responsive action program database 150, and/or the user device 160 via one or more direct connections (e.g., via a wire). In some embodiments, the remote computing device 170 is configured via hardware, software, firmware, and/or a combination thereof, to perform data intake of one or more types of data.

Additionally, or alternatively, in some embodiments, the remote computing device 170 is configured via hardware, software, firmware, and/or a combination thereof, to generate and/or transmit command(s) that control, adjust, or otherwise impact operations of the one or more of electronically and/or communicatively coupled to the second computing device 180, the computing file exchange platform 190, the first computing device 140, the responsive action program database 150, and/or the user device 160. For example, the remote computing device 170 may be configured to generate a second responsive action program. Additionally, or alternatively, in some embodiments, the remote computing device 170 is configured via hardware, software, firmware, and/or a combination thereof, to perform data reporting, provide data, and/or other data output process(es) associated with monitoring or otherwise analyzing operations of one or more of the and electronically and/or communicatively coupled to the second computing device 180, the computing file exchange platform 190, the first computing device 140, the responsive action program database 150, and/or the user device 160. For example, in various embodiments, the remote computing device 170 may be configured to execute and/or perform one or more operations and/or functions described herein.

In some embodiments, the environment 100 includes the computing file exchange platform 190. In some embodiments, the computing file exchange platform 190 is electronically and/or communicatively coupled to the second computing device 180, the remote computing device 170, the first computing device 140, the responsive action program database 150, and/or the user device 160. The computing file exchange platform 190 may be located remotely from the second computing device 180, the remote computing device 170, the first computing device 140, the responsive action program database 150, and/or the user device 160. In some embodiments, the computing file exchange platform 190 may be located in a remote cloud server and electronically and/or communicatively coupled to the second computing device 180, the remote computing device 170, the first computing device 140, the responsive action program database 150, and/or the user device 160. Additionally, or alternatively, the computing file exchange platform 190 may be located at the same location as the second computing device 180, the remote computing device 170, the first computing device 140, the responsive action program database 150, and/or the user device 160 and electronically and/or communicatively coupled to the second computing device 180, the remote computing device 170, the first computing device 140, the responsive action program database 150, and/or the user device 160 via one or more direct connections (e.g., via a wire). In some embodiments, the computing file exchange platform 190 is configured via hardware, software, firmware, and/or a combination thereof, to perform data intake of one or more types of data.

Additionally, or alternatively, in some embodiments, the computing file exchange platform 190 is configured via hardware, software, firmware, and/or a combination thereof, to generate and/or transmit command(s) that control, adjust, or otherwise impact operations of the one or more of electronically and/or communicatively coupled to the second computing device 180, the remote computing device 170, the first computing device 140, the responsive action program database 150, and/or the user device 160. For example, the computing file exchange platform 190 may be configured to facilitate exchange of one or more computing files between the second computing device 180, the remote computing device 170, the first computing device 140, the responsive action program database 150, and/or the user device 160. Additionally, or alternatively, in some embodiments, the computing file exchange platform 190 is configured via hardware, software, firmware, and/or a combination thereof, to perform data reporting, provide data, and/or other data output process(es) associated with monitoring or otherwise analyzing operations of one or more of the and electronically and/or communicatively coupled to the second computing device 180, the remote computing device 170, the first computing device 140, the responsive action program database 150, and/or the user device 160. For example, in various embodiments, the computing file exchange platform 190 may be configured to execute and/or perform one or more operations and/or functions described herein.

In some embodiments, the environment 100 includes the user device 160. The user device 160 may be associated with users of the second computing device 180, the remote computing device 170, the first computing device 140, the responsive action program database 150, and/or the computing file exchange platform 190. In various embodiments, the second computing device 180, the remote computing device 170, the first computing device 140, the responsive action program database 150, and/or the computing file exchange platform 190 may generate and/or transmit a message, alert, or indication to a user via the user device 160. Additionally, or alternatively, the user device 160 may be utilized by a user to remotely access the second computing device 180, the remote computing device 170, the first computing device 140, the responsive action program database 150, and/or the computing file exchange platform 190. This may be by, for example, an application operating on the user device 160.

In some embodiments, the environment 100 includes the responsive action program database 150. The responsive action program database 150 may be configured to receive, store, and/or transmit data. In various embodiments, the responsive action program database 150 may be associated with data associated with the second computing device 180, the remote computing device 170, the first computing device 140, the user device 160, and/or the computing file exchange platform 190. Additionally, or alternatively, in some embodiments the responsive action program database 150 stores user inputted data. The responsive action program database 150 may be located remotely from the second computing device 180, the remote computing device 170, the first computing device 140, the user device 160, and/or the computing file exchange platform 190, in proximity of the second computing device 180, the remote computing device 170, the first computing device 140, the user device 160, and/or the computing file exchange platform 190, and/or within the second computing device 180, the remote computing device 170, the first computing device 140, the user device 160, and/or the computing file exchange platform 190.

The network 130 may be embodied in any of a myriad of network configurations. In some embodiments, the network 130 may be a public network (e.g., the Internet). In some embodiments, the network 130 may be a private network (e.g., an internal localized, or closed-off network between particular devices). In some other embodiments, the network 130 may be a hybrid network (e.g., a network enabling internal communications between particular connected devices and external communications with other devices). In various embodiments, the network 130 may include one or more base station(s), relay(s), router(s), switch(es), cell tower(s), communications cable(s), routing station(s), and/or the like. In various embodiments, components of the environment 100 may be communicatively coupled to transmit data to and/or receive data from one another over the network 130. Such configuration(s) include, without limitation, a wired or wireless Personal Area Network (PAN), Local Area Network (LAN), Metropolitan Area Network (MAN), Wide Area Network (WAN), and/or the like.

Additionally, while FIG. 1 illustrates certain components as separate, standalone entities communicating over the network 130, various embodiments are not limited to this configuration. In other embodiments, one or more components may be directly connected and/or share hardware or the like. For example, in some embodiments, the first computing device 140 may include the responsive action program database 150.

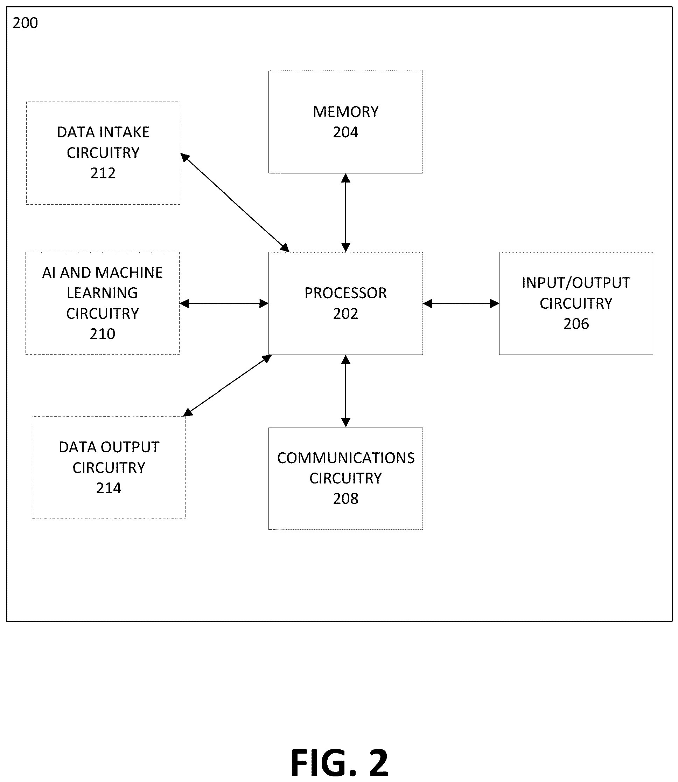

FIG. 2 illustrates an exemplary block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. Examples of an apparatus 200 may include, but is not limited to, the second computing device 180, the remote computing device 170, the first computing device 140, the user device 160, the responsive action program database 150, and/or the computing file exchange platform 190. The apparatus 200 includes processor 202, memory 204, input/output circuitry 206, communications circuitry 208, and/or optional artificial intelligence ("AI") and machine learning circuitry 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as an computing apparatus 200 of the second computing device 180, the remote computing device 170, the first computing device 140, the user device 160, the responsive action program database 150, and/or the computing file exchange platform 190 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the second computing device 180, the remote computing device 170, the first computing device 140, the user device 160, the responsive action program database 150, and/or the computing file exchange platform 190. In some embodiments, the data intake circuitry 212 includes hardware, software, firmware, and/or a combination thereof, that communicates with one or more components of the second computing device 180, the remote computing device 170, the first computing device 140, the user device 160, the responsive action program database 150, and/or the computing file exchange platform 190 to receive particular data associated with such operations of the second computing device 180, the remote computing device 170, the first computing device 140, the user device 160, the responsive action program database 150, and/or the computing file exchange platform 190. The data intake circuitry 212 may support such operations for the second computing device 180, the remote computing device 170, the first computing device 140, the user device 160, the responsive action program database 150, and/or the computing file exchange platform 190. Additionally, or alternatively, in some embodiments, the data intake circuitry 212 includes hardware, software, firmware, and/or a combination thereof, that retrieves particular data associated with the second computing device 180, the remote computing device 170, the first computing device 140, the user device 160, the responsive action program database 150, and/or the computing file exchange platform 190.

AI and machine learning circuitry 210 may be included in the apparatus 200. The AI and machine learning circuitry 210 may include hardware, software, firmware, and/or a combination thereof designed and/or configured to request, receive, process, generate, and transmit data, data structures, control signals, and electronic information for training and executing a trained AI and machine learning model configured to facilitating the operations and/or functionalities described herein. For example, in some embodiments the AI and machine learning circuitry 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the AI and machine learning circuitry 210 includes hardware, software, firmware, and/or a combination thereof, that embodies or retrieves a trained machine learning model, AI and/or other specially configured model utilized to process inputted data. Additionally, or alternatively, in some embodiments, the AI and machine learning circuitry 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the AI and machine learning circuitry 210, may be combined with the processor 202, such that the processor 202 performs one or more of the operations described herein with respect the AI and machine learning circuitry 210.

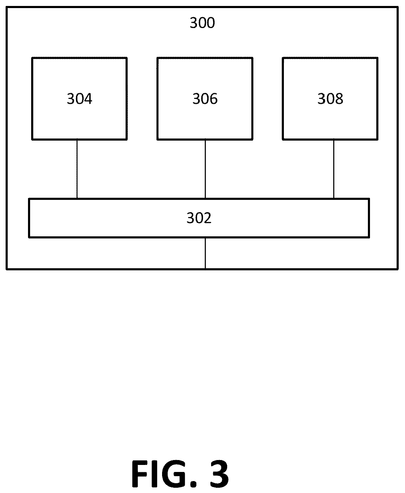

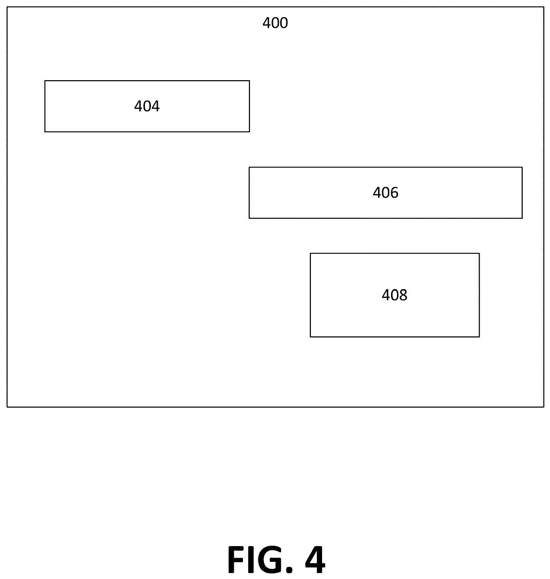

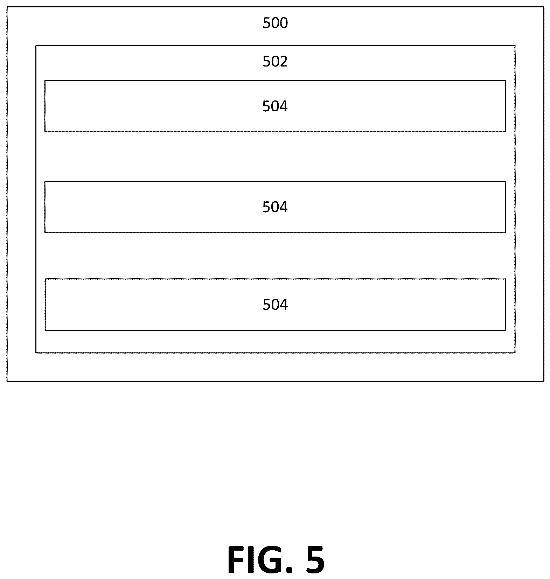

With reference to FIGS. 1-5, in some embodiments, first computing device 140 is configured to access a computing file. In some embodiments, the computing file is provided to the second computing device 180. For example, the first computing device 140 may be configured to provide the computing file to the second computing device 180. In some embodiments, the computing file may be provided to the second computing device 180 by the first computing device 140 via the computing file exchange platform 190. In this regard, for example, the first computing device 140 and/or the second computing device 180 may be configured to exchange computing files via the computing file exchange platform 190.

In some embodiments, the computing file comprises one or more items of data that are exchanged between computing devices, such as from the first computing device 140 to the second computing device 180 (e.g., via the computing file exchange platform 190). In this regard, in some embodiments, the computing file comprises text. For example, the computing file may comprise a text message that is provided to the second computing device 180 from the first computing device 140. Additionally, or alternatively, the computing file comprises audio. For example, the computing file may comprise an audio message that is provided to the second computing device 180 from the first computing device 140. Additionally, or alternatively, the computing file comprises one or more images. For example, the computing file may comprise an image based message and/or a video message that is provided to the second computing device 180 from the first computing device 140.

In some embodiments, the first computing device 140 is configured to access the computing file using a monitoring engine 304. In some embodiments, the monitoring engine 304 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to access the computing file. In this regard, in some embodiments, the monitoring engine 304 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the monitoring engine 304 may be configured to use one of the above techniques to monitor an exchange of computing files between the first computing device 140 and/or the second computing device 180 via the computing file exchange platform 190. In some embodiments, the monitoring engine 304 is part of a composite model framework 300 that is used to generate a responsive action program.

In some embodiments, the first computing device 140 is configured to establish a monitoring interface with the computing file exchange platform 190. In some embodiments, the monitoring interface is a gateway, communication channel, application programming interface (API), and/or the like that enables the first computing device 140 to, using the monitoring engine 304, monitor an exchange of computing files between the first computing device 140 and/or the second computing device 180 via the computing file exchange platform 190.

In some embodiments, the first computing device 140 is configured to identify a content defect associated with the computing file (e.g., the accessed computing file). In some embodiments, the first computing device 140 is configured to identify the content defect using the computing file content model 306. In some embodiments, the content defect is representative and/or indicative of a defect, missing component, error, request for information, and/or the like associated with the content of the computing file. In this regard, in some embodiments, the content defect may be associated with text, audio, and/or one or more images in a computing file that is associated with a question. For example, the content defect may be associated with text, audio, and/or one or more images in a computing file that is associated with a question, such as "how are labels loaded into the warehouse label printer?" Additionally, or alternatively, the content defect may content defect may be associated with text, audio, and/or one or more images in a computing file that is associated with an incorrect information. For example, the content defect may be associated with text, audio, and/or one or more images in a computing file that is associated with incorrect information, such as "labels are loaded into tray four of the warehouse label printer" when labels are actually loaded into tray three of the warehouse label printer. Additionally, or alternatively, the content defect may content defect may be associated with text, audio, and/or one or more images in a computing file that is associated with an incomplete information. For example, the content defect may be associated with text, audio, and/or one or more images in a computing file that is associated with incomplete information, such as "labels are loaded into tray four of the warehouse label printer" when labels actually need to be loaded into tray three and tray four of the warehouse label printer.

In some embodiments, identifying the content defect comprises the first computing device 140 being configured to identify one or more content features associated with the computing file. In some embodiments, a content feature comprises a keyword. In this regard, for example, the first computing device 140 may be configured to identify a keyword associated with the computing file by performing keyword detection. Additionally, or alternatively, a content feature comprises a sentiment (e.g., a sentiment of audio in the computing file). In this regard, for example, the first computing device 140 may be configured to identify a sentiment associated with the computing file by performing a sentiment analysis. Additionally, or alternatively, a content feature comprises an emotional tone (e.g., an emotional tone of text in the computing file). In this regard, for example, the first computing device 140 may be configured to identify an emotional tone associated with the computing file by performing an emotional tone analysis.

In some embodiments, the first computing device 140 is configured to generate the responsive action program. In some embodiments, the first computing device 140 is configured to generate the responsive action program using the content defect (e.g., the content defect associated with the computing file that was identified by the first computing device 140). Additionally, or alternatively, the first computing device 140 is configured to generate the responsive action program using the computing file content model 306. In some embodiments, the responsive action program comprises one or more subsidiary responsive action programs. In some embodiments, a subsidiary responsive action program is a task, action item, information item, and/or the like that may be implemented or reviewed in order to at least partially address, resolve, remedy, repair, and/or the like the content defect. In this regard, in some embodiments, a responsive action program comprises one or more subsidiary responsive action programs that when implemented or reviewed may address, resolve, remedy, repair, and/or the like the content defect.

In some embodiments, for example, when the content defect is associated with text, audio, and/or one or more images in a computing file that is associated with a question, a responsive action program may comprise one or more subsidiary responsive action programs that when implemented or reviewed may address, resolve, remedy, repair, and/or the like that answer the question (e.g., "labels are loaded into tray three of the warehouse label printer"). As another example, when the content defect is associated with text, audio, and/or one or more images in a computing file that is associated with incorrect information, a responsive action program may comprise one or more subsidiary responsive action programs that when implemented or reviewed may address, resolve, remedy, repair, and/or the like the incorrect information (e.g., "labels are loaded into tray three of the warehouse label printer and not tray two"). As another example, when the content defect is associated with text, audio, and/or one or more images in a computing file that is associated with incomplete information, a responsive action program may comprise one or more subsidiary responsive action programs that when implemented or reviewed may address, resolve, remedy, repair, and/or the like the incomplete information (e.g., "labels are loaded into tray four of the warehouse label printer as well as tray three").

In some embodiments, the computing file content model 306 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to identify the content defect associated with a computing file and/or generate a responsive action program. In this regard, in some embodiments, the computing file content model 306 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the computing file content model 306 may comprise a large language model that is configured to identify the content defect and/or generate the responsive action program.

In some embodiments, the computing file content model 306 is part of the composite model framework 300 that is used to generate the responsive action program. In some embodiments, the computing file content model 306 is configured to be trained using one or more domain resources. In some embodiments, a domain resource is one or more documents, information resources, historical responsive action programs, and/or the like associated with a domain. In some embodiments, a domain is representative and/or indicative of a domain in which the first computing device 140 operates. For example, a domain may be a warehouse that uses printers to print labels. In this regard, in some embodiments, the one or more domain resources may comprise one or more documents associated with a printer (e.g., an instruction manual), information resources associated with a printer (e.g., a troubleshooting guide for the printer), and/or historical responsive action programs associated with a printer.

In some embodiments, the first computing device 140 is configured to generate a responsive action program link interface element 408. In some embodiments, the responsive action program link interface element 408 comprises a responsive action program link representation. In some embodiments, the responsive action program link corresponds to the responsive action program. In some embodiments, the responsive action program link representation comprises one or more of text, images, or visual elements that indicates that the computing file is associated with the content defect and/or that the responsive action program is available for the content defect. For example, when the content defect is associated with text, audio, and/or one or more images in a computing file that is associated with a question, such as "how are labels loaded into the warehouse label printer?", the responsive action program link representation may be one or more of text, images, or visual elements that indicates "Hello, it looks like there is a question on how to load a label into the warehouse label printer, please access the responsive action program to answer the question." In some embodiments, the responsive action program link interface element 408 is selectable. In this regard, in some embodiments, the responsive action program link interface element 408 is selectable to access the responsive action program.

In some embodiments, the first computing device 140 is configured to cause the responsive action program link interface element 408 to be rendered to an interface 400. In some embodiments, interface 400 comprises a computing file representation 406 corresponding to the computing file. In some embodiments, the computing file representation 406 comprises one or more of text, images, or visual elements that is representative and/or indicative of the computing file (e.g., the data of the computing file may be rendered on the interface 400). In some embodiments, the interface 400 comprises one or more other computing file representations 404 corresponding to one or more other computing files. In some embodiments, the one or more other computing file representations 404 comprise one or more of text, images, or visual elements that is representative and/or indicative of one or more other computing files that have been provided between the first computing device 140 and/or the second computing device 180 via the computing file exchange platform 190. In some embodiments, the interface 400 is associated with the computing file exchange platform 190. In this regard, in some embodiments, the responsive action program link interface element 408 is configured to be rendered proximate the computing file representation 406 on the interface 400 such that the responsive action program can be readily accessed to address the content defect associated with the computing file. Additionally, or alternatively, the interface 400 may be provided via the first computing device 140, the second computing device 180, the remote computing device 170, and/or the user device 160. In some embodiments, the first computing device 140 is configured to cause the responsive action program link interface element 408 to be rendered to the interface 400 in real-time (e.g., in response to identification of the content defect and/or generation of the responsive action program). Additionally, or alternatively, the first computing device 140 is configured to cause the responsive action program link interface element 408 to be rendered to the interface 400 on a periodic basis (e.g., in accordance with a schedule).

In some embodiments, the first computing device 140 is configured to generate a responsive action program interface element 502. In some embodiments, the responsive action program interface element 502 comprises a responsive action program representation corresponding to the responsive action program. In some embodiments, the responsive action program representation comprises one or more of text, images, or visual elements that are representative and/or indicative of the responsive action program. In this regard, in some embodiments, the responsive action program interface element 502 comprises one or more subsidiary responsive action program representations 504. In some embodiments, the one or more subsidiary responsive action program representations 504 comprise one or more subsidiary responsive action program representations 504. In some embodiments, a responsive action program representation comprises one or more of text, images, or visual elements that are representative and/or indicative of a subsidiary responsive action program of the responsive action program.

In some embodiments, the first computing device 140 is configured to cause the responsive action program interface element 502 to be rendered to a second interface 500. In some embodiments, the responsive action program interface element 502 is rendered to the second interface 500 in response to a selection of the responsive action program link interface element 408. In some embodiments, the second interface 500 may be provided via the computing file exchange platform 190, the first computing device 140, the second computing device 180, the remote computing device 170, and/or the user device 160.

In some embodiments, the first computing device 140 is configured to detect a termination of the responsive action program. In some embodiments, the first computing device 140 is configured to detect a termination of the responsive action program when the responsive action program is removed from the second interface 500 (e.g., by a user who is reviewing the responsive action program). Additionally, or alternatively, the first computing device 140 is configured to detect a termination of the responsive action program when the responsive action program is completed. In this regard, in some embodiments, the responsive action program may be completed when each task, action item, and/or information item in the responsive action program has been implemented or reviewed.

In some embodiments, the first computing device 140 is configured to generate a responsive action program result. In some embodiments, the first computing device 140 is configured to generate the responsive action program result based on the termination of the responsive action program. In some embodiments, the responsive action program result comprises one or more items of data representative and/or indicative of a completion of the responsive action program. In this regard, for example, the responsive action program result may comprise one or more items of data that indicate that each task, action item, and/or information item in the responsive action program has been implemented or reviewed. Additionally, or alternatively, the responsive action program result comprises one or more items of data representative and/or indicative of a partial completion of the responsive action program. In this regard, for example, responsive action program result may comprise one or more items of data that indicate that some of the tasks, action items, and/or information items in the responsive action program has been implemented or reviewed.

In some embodiments, the first computing device 140 is configured to store the responsive action program result in the responsive action program database 150. In some embodiments, the responsive action program result is stored in the responsive action program database 150 in accordance with a computing file identifier associated with the computing file. In some embodiments, the computing file identifier is a data object that is representative of a user that corresponds to the computing file (e.g., a user who generated the computing file). In this regard, in some embodiments, the responsive action program result is stored in the responsive action program database 150 such that the responsive action program result is associated with the user corresponding to the computing file. For example, the responsive action program result is stored in the responsive action program database 150 such that the responsive action program result is associated with a profile of the user corresponding to the computing file.

In some embodiments, the first computing device 140 is configured to generate a responsive action program indicator. In some embodiments, the responsive action program indicator is generated using the responsive action program result and/or an implementation model 308. In some embodiments, the responsive action program indicator is a data object representative of a digital icon, symbol, badge, and/or the like. In this regard, in some embodiments, responsive action program indicator is configured to symbolically represent the responsive action program result.

In some embodiments, the implementation model 308 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate the responsive action program indicator. In this regard, in some embodiments, the implementation model 308 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques.

In some embodiments, the implementation model 308 is part of the composite model framework 300 that is used to generate the responsive action program. In some embodiments, the composite model framework 300 is hosted, implemented, operated, and/or the like by the first computing device 140, the second computing device 180, and/or the remote computing device 170. In some embodiments, the monitoring engine 304, the computing file content model 306, and/or the implementation model 308 are configured to communicate via a bus 302 of the composite model framework 300. In this regard, in some embodiments, the monitoring engine 304, the computing file content model 306, and/or the implementation model 308 are each specifically configured to perform various aspects of a process for generating a responsive action program and are configured to collaboratively work together to generate the responsive action program. In this way, in some embodiments, by using the composite model framework 300, the first computing device 140, the second computing device 180, and/or the remote computing device 170 are configured to generate the responsive action program in a manner that would not be possible using standalone models.

In some embodiments, the first computing device 140 is configured to store the responsive action program indicator in the responsive action program database 150. In some embodiments, the responsive action program indicator is stored in the responsive action program database 150 in accordance with the computing file identifier associated with the computing file. In this regard, in some embodiments, the responsive action program indicator is stored in the responsive action program database 150 such that the responsive action program indicator is associated with the user corresponding to the computing file. For example, the responsive action program indicator is stored in the responsive action program database 150 such that the responsive action program indicator is associated with a profile of the user corresponding to the computing file.

In some embodiments, the first computing device 140 is configured to access a second computing file. In some embodiments, the second computing file is provided to the second computing device 180. For example, the first computing device 140 may be configured to provide the second computing file to the second computing device 180. In some embodiments, the second computing file may be provided to the second computing device 180 by the first computing device 140 via the computing file exchange platform 190. In some embodiments, the second computing file, similar to the computing file described above, comprises one or more items of data that are exchanged between computing devices, such as from the first computing device 140 to the second computing device 180 (e.g., via the computing file exchange platform 190). In some embodiments, the first computing device 140 is configured to access the second computing file using the monitoring engine 304.

In some embodiments, the first computing device 140 is configured to determine a processing consumption value associated with the second computing file. In some embodiments, a processing consumption value is a data object representative and/or indicative of an amount of processing consumption, memory consumption, and/or the like that is required to identify a second content defect associated with the second computing file and/or generate a second responsive action program associated with the second computing file.

In some embodiments, the first computing device 140 is configured to determine if the processing consumption value meets or exceeds a processing consumption threshold. In some embodiments, the processing consumption threshold is a particular amount of processing consumption, memory consumption, and/or the like. In this regard, in some embodiments, if the processing consumption value meets or exceed the processing consumption threshold, identifying a second content defect associated with the second computing file and/or generating a second responsive action program associated with the second computing file requires more processing consumption, memory consumption, and/or the like than if the processing consumption value is below the processing consumption threshold. For example, when the second computing file comprises one or more images, the processing consumption value is greater than if the second computing file does not comprise one or more images (e.g., when the second computing file only includes text).

In some embodiments, the first computing device 140 is configured to transmit the second computing file to the remote computing device 170. In some embodiments, the first computing device 140 is configured to transmit the second computing file to the remote computing device 170 in response to the processing consumption value meeting or exceeding a processing consumption threshold. In this regard, in some embodiments, the remote computing device 170 is configured such that the remote computing device 170 is able to process computing files, such as the second computing file, that are associated with processing consumption values that meet or exceed the processing consumption threshold. For example, the remote computing device 170 may have greater processing resources and/or memory resources.

In some embodiments, the first computing device 140 is configured to receive a second responsive action program corresponding to the second computing file. In some embodiments, the first computing device 140 is configured to receive a second responsive action program from the remote computing device 170. In this regard, in some embodiments, the remote computing device 170 is configured to generate the second responsive action program in a similar manner as described above with respect to the first computing device 140 and the responsive action program.

### Example Methods

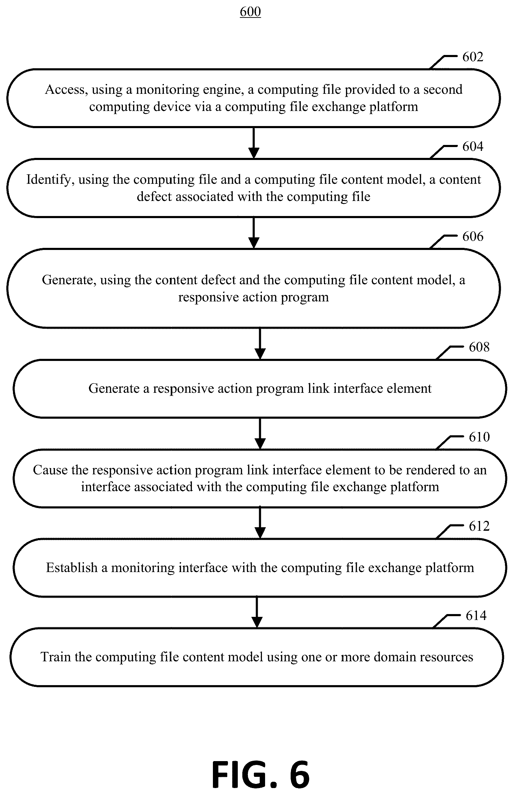

Referring now to FIG. 6, a flowchart providing an example method 600 is illustrated. In this regard, FIG. 6 illustrates operations that may be performed by the first computing device 140, the remote computing device 170, the computing file exchange platform 190, the second computing device 180, the responsive action program database 150, the user device 160, and/or the like. In some embodiments, the method 600 includes operations for generating a responsive action program. In some embodiments, the example method 600 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 600.

As shown in block 602, the method 600 includes accessing, using a monitoring engine, a computing file provided to a second computing device via a computing file exchange platform. As described above, in some embodiments, the computing file is provided to the second computing device 180. For example, the first computing device 140 may be configured to provide the computing file to the second computing device 180. In some embodiments, the computing file may be provided to the second computing device 180 by the first computing device 140 via the computing file exchange platform 190. In this regard, for example, the first computing device 140 and/or the second computing device 180 may be configured to exchange computing files via the computing file exchange platform 190.

In some embodiments, the computing file comprises one or more items of data that are exchanged between computing devices, such as from the first computing device 140 to the second computing device 180 (e.g., via the computing file exchange platform 190). In this regard, in some embodiments, the computing file comprises text. For example, the computing file may comprise a text message that is provided to the second computing device 180 from the first computing device 140. Additionally, or alternatively, the computing file comprises audio. For example, the computing file may comprise an audio message that is provided to the second computing device 180 from the first computing device 140. Additionally, or alternatively, the computing file comprises one or more images. For example, the computing file may comprise an image based message and/or a video message that is provided to the second computing device 180 from the first computing device 140.

In some embodiments, the first computing device 140 is configured to access the computing file using a monitoring engine 304. In some embodiments, the monitoring engine 304 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to access the computing file. In this regard, in some embodiments, the monitoring engine 304 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the monitoring engine 304 may be configured to use one of the above techniques to monitor an exchange of computing files between the first computing device 140 and/or the second computing device 180 via the computing file exchange platform 190. In some embodiments, the monitoring engine 304 is part of a composite model framework 300 that is used to generate a responsive action program.

As shown in block 604, the method 600 includes identifying, using the computing file and a computing file content model, a content defect associated with the computing file. As described above, in some embodiments, the content defect is representative and/or indicative of a defect, missing component, error, request for information, and/or the like associated with the content of the computing file. In this regard, in some embodiments, the content defect may be associated with text, audio, and/or one or more images in a computing file that is associated with a question. For example, the content defect may be associated with text, audio, and/or one or more images in a computing file that is associated with a question, such as "how are labels loaded into the warehouse label printer?" Additionally, or alternatively, the content defect may content defect may be associated with text, audio, and/or one or more images in a computing file that is associated with an incorrect information. For example, the content defect may be associated with text, audio, and/or one or more images in a computing file that is associated with incorrect information, such as "labels are loaded into tray four of the warehouse label printer" when labels are actually loaded into tray three of the warehouse label printer. Additionally, or alternatively, the content defect may content defect may be associated with text, audio, and/or one or more images in a computing file that is associated with an incomplete information. For example, the content defect may be associated with text, audio, and/or one or more images in a computing file that is associated with incomplete information, such as "labels are loaded into tray four of the warehouse label printer" when labels actually need to be loaded into tray three and tray four of the warehouse label printer.

In some embodiments, identifying the content defect comprises the first computing device being configured to identify one or more content features associated with the computing file. In some embodiments, a content feature comprises a keyword. In this regard, for example, the first computing device 140 may be configured to identify a keyword associated with the computing file by performing keyword detection. Additionally, or alternatively, a content feature comprises a sentiment (e.g., a sentiment of audio in the computing file). In this regard, for example, the first computing device 140 may be configured to identify a sentiment associated with the computing file by performing a sentiment analysis. Additionally, or alternatively, a content feature comprises an emotional tone (e.g., an emotional tone of text in the computing file). In this regard, for example, the first computing device 140 may be configured to identify an emotional tone associated with the computing file by performing an emotional tone analysis.

As shown in block 606, the method 600 includes generating, using the content defect and the computing file content model, a responsive action program. As described above, in some embodiments, the responsive action program comprises one or more subsidiary responsive action programs. In some embodiments, a subsidiary responsive action program is a task, action item, information item, and/or the like that may be implemented or reviewed in order to at least partially address, resolve, remedy, repair, and/or the like the content defect. In this regard, in some embodiments, a responsive action program comprises one or more subsidiary responsive action programs that when implemented or reviewed may address, resolve, remedy, repair, and/or the like the content defect.

In some embodiments, for example, when the content defect is associated with text, audio, and/or one or more images in a computing file that is associated with a question, a responsive action program may comprise one or more subsidiary responsive action programs that when implemented or reviewed may address, resolve, remedy, repair, and/or the like that answer the question (e.g., "labels are loaded into tray three of the warehouse label printer"). As another example, when the content defect is associated with text, audio, and/or one or more images in a computing file that is associated with incorrect information, a responsive action program may comprise one or more subsidiary responsive action programs that when implemented or reviewed may address, resolve, remedy, repair, and/or the like the incorrect information (e.g., "labels are loaded into tray three of the warehouse label printer and not tray two"). As another example, when the content defect is associated with text, audio, and/or one or more images in a computing file that is associated with incomplete information, a responsive action program may comprise one or more subsidiary responsive action programs that when implemented or reviewed may address, resolve, remedy, repair, and/or the like the incomplete information (e.g., "labels are loaded into tray four of the warehouse label printer as well as tray three").

In some embodiments, the computing file content model 306 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to identify the content defect associated with a computing file and/or generate a responsive action program. In this regard, in some embodiments, the computing file content model 306 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques. For example, the computing file content model 306 may comprise a large language model that is configured to identify the content defect and/or generate the responsive action program.

As shown in block 608, the method 600 includes generating a responsive action program link interface element. As described above, in some embodiments, the responsive action program link interface element 408 comprises a responsive action program link representation. In some embodiments, the responsive action program link corresponds to the responsive action program. In some embodiments, the responsive action program link representation comprises one or more of text, images, or visual elements that indicates that the computing file is associated with the content defect and/or that the responsive action program is available for the content defect. For example, when the content defect is associated with text, audio, and/or one or more images in a computing file that is associated with a question, such as "how are labels loaded into the warehouse label printer?", the responsive action program link representation may be one or more of text, images, or visual elements that indicates "Hello, it looks like there is a question on how to load a label into the warehouse label printer, please access the responsive action program to answer the question." In some embodiments, the responsive action program link interface element 408 is selectable. In this regard, in some embodiments, the responsive action program link interface element 408 is selectable to access the responsive action program.

As shown in block 610, the method 600 includes causing the responsive action program link interface element to be rendered to an interface associated with the computing file exchange platform. As described above, in some embodiments, interface 400 comprises a computing file representation 406 corresponding to the computing file. In some embodiments, the computing file representation 406 comprises one or more of text, images, or visual elements that is representative and/or indicative of the computing file (e.g., the data of the computing file may be rendered on the interface 400). In some embodiments, the interface 400 comprises one or more other computing file representations 404 corresponding to one or more other computing files. In some embodiments, the one or more other computing file representations 404 comprise one or more of text, images, or visual elements that is representative and/or indicative of one or more other computing files that have been provided between the first computing device 140 and/or the second computing device 180 via the computing file exchange platform 190. In some embodiments, the interface 400 is associated with the computing file exchange platform 190. In this regard, in some embodiments, the responsive action program link interface element 408 is configured to be rendered proximate the computing file representation 406 on the interface 400 such that the responsive action program can be readily accessed to address the content defect associated with the computing file. Additionally, or alternatively, the interface 400 may be provided via the first computing device 140, the second computing device 180, the remote computing device 170, and/or the user device 160. In some embodiments, the first computing device 140 is configured to cause the responsive action program link interface element 408 to be rendered to the interface 400 in real-time (e.g., in response to identification of the content defect and/or generation of the responsive action program). Additionally, or alternatively, the first computing device 140 is configured to cause the responsive action program link interface element 408 to be rendered to the interface 400 on a periodic basis (e.g., in accordance with a schedule).

As shown in block 612, the method 600 includes establishing a monitoring interface with the computing file exchange platform. As described above, in some embodiments, the monitoring interface is a gateway, communication channel, application programming interface (API), and/or the like that enables the first computing device 140 to, using the monitoring engine 304, monitor an exchange of computing files between the first computing device 140 and/or the second computing device 180 via the computing file exchange platform 190.

As shown in block 614, the method 600 includes training the computing file content model using one or more domain resources. As described above, in some embodiments, a domain resource is one or more documents, information resources, historical responsive action programs, and/or the like associated with a domain. In some embodiments, a domain is representative and/or indicative of an environment in which the first computing device 140 operates. For example, a domain may be a warehouse that uses printers to print labels. In this regard, in some embodiments, the one or more domain resources may comprise one or more documents associated with a printer (e.g., an instruction manual), information resources associated with a printer (e.g., a troubleshooting guide for the printer), and/or historical responsive action programs associated with a printer.

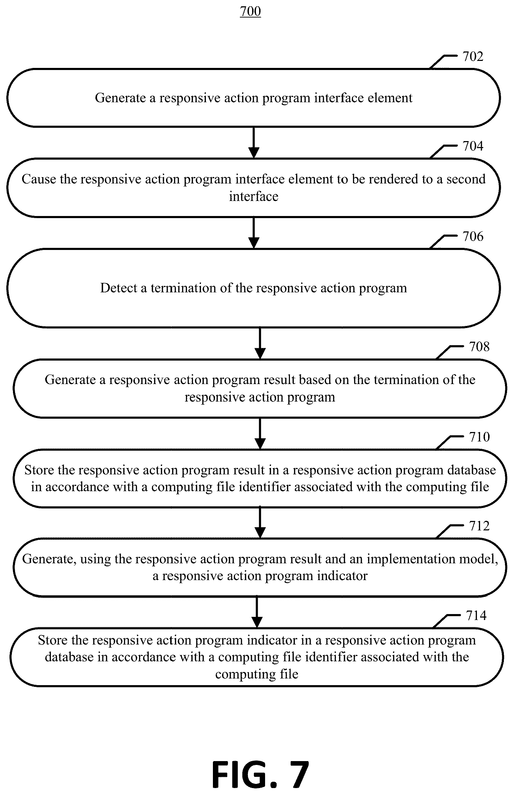

Referring now to FIG. 7, a flowchart providing an example method 700 is illustrated. In this regard, FIG. 7 illustrates operations that may be performed by the first computing device 140, the remote computing device 170, the computing file exchange platform 190, the second computing device 180, the responsive action program database 150, the user device 160, and/or the like. In some embodiments, the method 700 includes operations for generating a responsive action program result. In some embodiments, the example method 700 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 700.

As shown in block 702, the method 700 includes generating a responsive action program interface element. As described above, in some embodiments, the responsive action program interface element 502 comprises a responsive action program representation corresponding to the responsive action program. In some embodiments, the responsive action program representation comprises one or more of text, images, or visual elements that are representative and/or indicative of the responsive action program. In this regard, in some embodiments, the responsive action program interface element 502 comprises one or more subsidiary responsive action program representations 504. In some embodiments, the one or more subsidiary responsive action program representations 504 comprise one or more subsidiary responsive action program representations. In some embodiments, a responsive action program representation comprises one or more of text, images, or visual elements that are representative and/or indicative of a subsidiary responsive action program of the responsive action program.

As shown in block 704, the method 700 includes causing the responsive action program interface element to be rendered to a second interface. As described above, in some embodiments, the responsive action program interface element 502 is rendered to the second interface 500 in response to a selection of the responsive action program link interface element 408. In some embodiments, the second interface 500 may be provided via the computing file exchange platform 190, the first computing device 140, the second computing device 180, the remote computing device 170, and/or the user device 160.

As shown in block 706, the method 700 includes detecting a termination of the responsive action program. As described above, in some embodiments, the first computing device 140 is configured to detect a termination of the responsive action program when the responsive action program is removed from the second interface 500 (e.g., by a user who is reviewing the responsive action program). Additionally, or alternatively, the first computing device 140 is configured to detect a termination of the responsive action program when the responsive action program is completed. In this regard, in some embodiments, the responsive action program may be completed when each task, action item, and/or information item in the responsive action program has been implemented or reviewed.

As shown in block 708, the method 700 includes generating a responsive action program result based on the termination of the responsive action program. As described above, in some embodiments, the first computing device 140 is configured to generate the responsive action program result based on the termination of the responsive action program. In some embodiments, the responsive action program result comprises one or more items of data representative and/or indicative of a completion of the responsive action program. In this regard, for example, the responsive action program result may comprise one or more items of data that indicate that each task, action item, and/or information item in the responsive action program has been implemented or reviewed. Additionally, or alternatively, the responsive action program result comprises one or more items of data representative and/or indicative of a partial completion of the responsive action program. In this regard, for example, responsive action program result may comprise one or more items of data that indicate that some of the tasks, action items, and/or information items in the responsive action program has been implemented or reviewed.

As shown in block 710, the method 700 includes storing the responsive action program result in a responsive action program database in accordance with a computing file identifier associated with the computing file. As described above, in some embodiments, the computing file identifier is a data object that is representative of a user that corresponds to the computing file (e.g., a user who generated the computing file). In this regard, in some embodiments, the responsive action program result is stored in the responsive action program database 150 such that the responsive action program result is associated with the user corresponding to the computing file. For example, the responsive action program result is stored in the responsive action program database 150 such that the responsive action program result is associated with a profile of the user corresponding to the computing file.

As shown in block 712, the method 700 includes generating, using the responsive action program result and an implementation model, a responsive action program indicator. As described above, in some embodiments, the responsive action program indicator is a data object representative of a digital icon, symbol, badge, and/or the like. In this regard, in some embodiments, responsive action program indicator is configured to symbolically represent the responsive action program result.

In some embodiments, the implementation model 308 may be a data entity that describes parameters, hyper-parameters, and/or defined operations of a rules-based, machine learning model, and/or generative artificial intelligence model (e.g., model including at least one of one or more rule-based layers, one or more layers that depend on trained parameters, coefficients, and/or the like) configured to generate the responsive action program indicator. In this regard, in some embodiments, the implementation model 308 may be configured to utilize one or more of any type of machine learning, rules-based, and/or artificial intelligence techniques including one or more of clustering techniques (e.g., k-means techniques, expectation maximization techniques, centroid neural network techniques), computer vision techniques, supervised learning (e.g., using user feedback), unsupervised learning, semi-supervised learning, reinforcement learning, sequence modeling techniques, language processing techniques, neural network techniques, and/or generative artificial intelligence techniques.

In some embodiments, the implementation model 308 is part of the composite model framework 300 that is used to generate the responsive action program. In some embodiments, the composite model framework 300 is hosted, implemented, operated, and/or the like by the first computing device 140, the second computing device 180, and/or the remote computing device 170. In some embodiments, the monitoring engine 304, the computing file content model 306, and/or the implementation model 308 are configured to communicate via a bus 302 of the composite model framework 300. In this regard, in some embodiments, the monitoring engine 304, the computing file content model 306, and/or the implementation model 308 are each specifically configured to perform various aspects of a process for generating a responsive action program and are configured to collaboratively work together to generate the responsive action program. In this way, in some embodiments, by using the composite model framework 300, the first computing device 140, the second computing device 180, and/or the remote computing device 170 are configured to generate the responsive action program in a manner that would not be possible using standalone models.

As shown in block 714, the method 700 includes storing the responsive action program indicator in a responsive action program database in accordance with a computing file identifier associated with the computing file. As described above, in some embodiments, the responsive action program indicator is stored in the responsive action program database 150 in accordance with the computing file identifier associated with the computing file. In this regard, in some embodiments, the responsive action program indicator is stored in the responsive action program database 150 such that the responsive action program indicator is associated with the user corresponding to the computing file. For example, the responsive action program indicator is stored in the responsive action program database 150 such that the responsive action program indicator is associated with a profile of the user corresponding to the computing file.

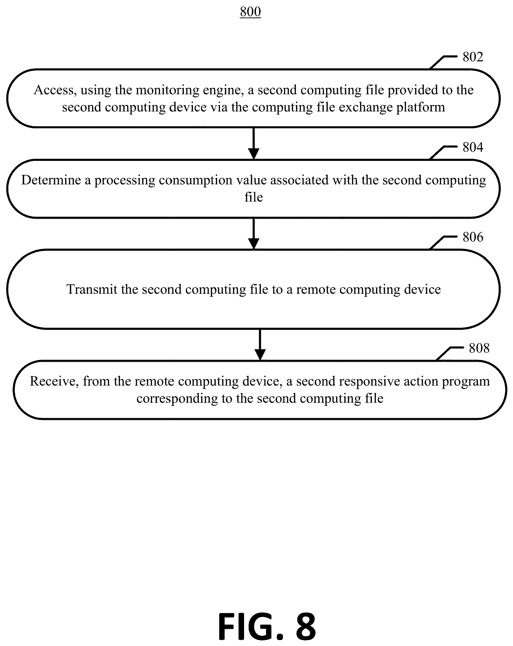

Referring now to FIG. 8, a flowchart providing an example method 800 is illustrated. In this regard, FIG. 8 illustrates operations that may be performed by the first computing device 140, the remote computing device 170, the computing file exchange platform 190, the second computing device 180, the responsive action program database 150, the user device 160, and/or the like. In some embodiments, the method 800 includes operations for receiving a responsive action program. In some embodiments, the example method 800 defines a process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 800.

As shown in block 802, the method 800 includes accessing, using the monitoring engine, a second computing file provided to the second computing device via the computing file exchange platform. As described above, in some embodiments, the first computing device 140 may be configured to provide the second computing file to the second computing device 180. In some embodiments, the second computing file may be provided to the second computing device 180 by the first computing device 140 via the computing file exchange platform 190. In some embodiments, the second computing file, similar to the computing file described above, comprises one or more items of data that are exchanged between computing devices, such as from the first computing device 140 to the second computing device 180 (e.g., via the computing file exchange platform 190). In some embodiments, the first computing device 140 is configured to access the second computing file using the monitoring engine 304.

As shown in block 804, the method 800 includes determining a processing consumption value associated with the second computing file. As described above, in some embodiments, a processing consumption value is a data object representative and/or indicative of an amount of processing consumption, memory consumption, and/or the like that is required to identify a second content defect associated with the second computing file and/or generate a second responsive action program associated with the second computing file.

As shown in block 806, the method 800 includes transmitting the second computing file to a remote computing device. As described above, in some embodiments, the processing consumption threshold is a particular amount of processing consumption, memory consumption, and/or the like. In this regard, in some embodiments, if the processing consumption value meets or exceed the processing consumption threshold, identifying a second content defect associated with the second computing file and/or generating a second responsive action program associated with the second computing file requires more processing consumption, memory consumption, and/or the like than if the processing consumption value is below the processing consumption threshold. For example, when the second computing file comprises one or more images, the processing consumption value is greater than if the second computing file does not comprise one or more images (e.g., when the second computing file only includes text).

In some embodiments, the first computing device 140 is configured to transmit the second computing file to the remote computing device 170. In some embodiments, the first computing device 140 is configured to transmit the second computing file to the remote computing device 170 in response to the processing consumption value meeting or exceeding a processing consumption threshold. In this regard, in some embodiments, the remote computing device 170 is configured such that the remote computing device 170 is able to process computing files, such as the second computing file, that are associated with processing consumption values that meet or exceed the processing consumption threshold. For example, the remote computing device 170 may have greater processing resources and/or memory resources.

As shown in block 808, the method 800 includes receiving, from the remote computing device, a second responsive action program corresponding to the second computing file. As described above, in some embodiments, the remote computing device 170 is configured to generate the second responsive action program in a similar manner as described above with respect to the first computing device 140 and the responsive action program.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:
accessing, using a monitoring engine, a computing file provided to a second computing device via a computing file exchange platform;
identifying, using the computing file and a computing file content model, a content defect associated with the computing file;
generating, using the content defect and the computing file content model, a responsive action program;
generating a responsive action program link interface element, wherein the responsive action program link interface element comprises a responsive action program link representation corresponding to the responsive action program; and
causing the responsive action program link interface element to be rendered to an interface associated with the computing file exchange platform.

2. The method of claim 1, further comprising:
establishing a monitoring interface with the computing file exchange platform.

3. The method of claim 1, further comprising:
training the computing file content model using one or more domain resources.

4. The method of claim 1, further comprising:
generating a responsive action program interface element, wherein the responsive action program interface element comprises a responsive action program representation corresponding to the responsive action program, wherein the responsive action program comprises one or more subsidiary responsive action programs;
causing the responsive action program interface element to be rendered to a second interface;
detecting a termination of the responsive action program; and
generating a responsive action program result based on the termination of the responsive action program.

5. The method of claim 4, further comprising:
storing the responsive action program result in a responsive action program database in accordance with a computing file identifier associated with the computing file.

6. The method of claim 4, further comprising:
generating, using the responsive action program result and an implementation model, a responsive action program indicator; and
storing the responsive action program indicator in a responsive action program database in accordance with a computing file identifier associated with the computing file.

7. The method of claim 6, wherein the monitoring engine, the computing file content model, and the implementation model are part of a composite model framework.

8. The method of claim 1, further comprising:
accessing, using the monitoring engine, a second computing file provided to the second computing device via the computing file exchange platform;
determining a processing consumption value associated with the second computing file;
in response to the processing consumption value meeting or exceeding a processing consumption threshold, transmitting the second computing file to a remote computing device; and
receiving, from the remote computing device, a second responsive action program corresponding to the second computing file.

9. The method of claim 1, wherein the computing file comprises text or audio.

10. The method of claim 1, wherein the computing file comprises one or more images.

11. The method of claim 1, wherein the interface associated with the computing file exchange platform comprises a computing file representation corresponding to the computing file.

12. The method of claim 1, wherein identifying the content defect comprises identifying one or more content features associated with the computing file.

13. An apparatus comprising memory and one or more processors communicatively coupled to the memory, the one or more processors configured to perform operations comprising:
accessing, using a monitoring engine, a computing file provided to a second computing device via a computing file exchange platform;
identifying, using the computing file and a computing file content model, a content defect associated with the computing file;
generating, using the content defect and the computing file content model, a responsive action program;
generating a responsive action program link interface element, wherein the responsive action program link interface element comprises a responsive action program link representation corresponding to the responsive action program; and
causing the responsive action program link interface element to be rendered to an interface associated with the computing file exchange platform.

14. The apparatus of claim 13, wherein the operations further comprise:
establishing a monitoring interface with the computing file exchange platform.

15. A computer program product comprising at least one non-transitory computer-readable storage medium having computer program code stored thereon that, in execution with one or more processors, configures the computer program product for:
accessing, using a monitoring engine, a computing file provided to a second computing device via a computing file exchange platform;
identifying, using the computing file and a computing file content model, a content defect associated with the computing file;
generating, using the content defect and the computing file content model, a responsive action program;
generating a responsive action program link interface element, wherein the responsive action program link interface element comprises a responsive action program link representation corresponding to the responsive action program; and
causing the responsive action program link interface element to be rendered to an interface associated with the computing file exchange platform.
